# EUROPEAN PATENT SPECIFICATION

(11) **EP 0 517 317 B1**
(45) Date of publication and mention of the grant of the patent: **10.01.1996**
(21) Application number: 92201559.9
(22) Date of filing: 01.06.1992
(51) Int. Cl.: C08F 8/40, C08C 19/44

(54) **Polymer process**
Verfahren zur Herstellung von Polymeren
Procédé de préparation de polymères

(30) Priority: 03.06.1991 GB 9111872
(43) Date of publication of application: 09.12.1992
(73) Proprietor: SHELL INTERNATIONALE RESEARCH MAATSCHAPPIJ B.V., NL-2596 HR Den Haag (NL)
(72) Inventor: Koppes, Margaretha Johanna Caecilia Maria, NL-1031 CM Amsterdam (NL); Walhof, Judith Johanna Berendina, NL-1031 CM Amsterdam (NL); Van Doorn, Johannes Adrianus, NL-1031 CM Amsterdam (NL)

(56) References cited:
- EP-A- 0 065 120
- FR-A- 2 251 567
- US-A- 4 581 415

## Description

The present invention relates to a process for the preparation of polymers, based on at least a conjugated diene and/or a monoalkylene aromatic compound, in the presence of an organoalkali metal initiator, and more in particular to such a process comprising a step for coupling the living polymer chains and to the polymers thus prepared.

The preparation of polymers based on at least a conjugated diene and/or a monoalkylene aromatic compound in the presence of an organoalkali metal initiator is known, as is the procedure to terminate the polymerization by contacting the living polymer chains with a coupling agent, thus obtaining polymers of increased molecular weight, rather than deactivating the living polymer chains by contacting them with a deactivating agent such as for example a protic compound. Depending on the functionality of the coupling agent and on the molar ratio wherein it is employed with respect to the living polymers chains, the coupled polymers will have a linear or a branched structure, or the resulting product will comprise a mixture of linear and branched polymer species.

Although the preparation of branched polymers is nearly always conducted via a procedure which includes a coupling step in addition to a polymerization step, the use of coupling agents for the preparation of linear polymers is generally restricted to the preparation of those linear polymers for which an alternative conventional polymerization process, i.e. a sequential polymerization process is technically or economically unattractive. Examples of such polymers include high molecular weight conjugated diene polymers, and block copolymers wherein the end blocks are substantially identical, i.e. having the same chemical compositions as well as the same molecular weight.

A large number of compounds have been proposed as difunctional coupling agent for the preparation of linear coupled polymers via an anionic polymerization process, such as for example silicon compounds, tin compounds, aromatic diisocyanates, esters, dialdehydes and diketones. However, many of these couplings agents, and especially the silicon and the tin based compounds, contain halogen atoms as the reactive sites, which, when reacted with the living polymer, will form an alkali metal halogenide, which alkali metal halogenide will generally be lithium chloride. Lithium halides are not only corrosive but also a known source of discoloration. Other proposed coupling agents, such as for example the aromatic diisocyanates, are toxic. With yet other coupling agents such as the esters and tin compounds, it has been experienced that the thermal stability of the coupled products leaves room for improvement. Finally it is known that dialdehyde and diketone-type coupling agents are not very suitable when a very high coupling efficiency is required.

An alternative approach to prepare linear coupled polymers would be a procedure wherein the difunctional coupling agent is replaced with e.g. the same number of moles of a polyfunctional coupling agent not suffering from one or more of the hereinbefore mentioned disadvantages, e.g. a suitable trifunctional coupling agent. However when using polyfunctional coupling agents in said process the selectivity to linear coupled polymer will be low, as the reaction product will comprise a mixture of non-coupled, capped, linear coupled and branched polymer species. Hence it can be concluded that there is considerable need for difunctional coupling agents for use in the preparation of linear, coupled polymers, and which coupling agents do not suffer from one or more of the disadvantages as described hereinbefore.

As a result of extensive research and experimentation it was surprisingly found that the problem underlying the present invention, i.e. developing a process for the preparation of linear, coupled polymers not having one or more of the disadvantages as mentioned hereinbefore, could be solved by employing selected phosphonites and phosphonates as coupling agent.

Accordingly the invention provides a process for the preparation of linear polymers which comprises polymerizing at least a conjugated diene and/or a monoalkylene aromatic compound in the presence of an organoalkali metal initiator compound and at least a hydrocarbon diluent, and subsequently contacting the living polymer chains with a compound of general formula:

RP(X) ₙ (OR¹)₂ (I)

wherein R is a hydrocarbyl group of which the carbon atom connected to the phosphorus atom is a secondary or tertiary carbon atom; R¹ is an optionally substituted hydrocarbyl group; X represents an 0 or S atom; and n is 0 or 1.

The hydrocarbyl group R of the compounds of general formula I may be an alkyl group such as isopropyl, sec-butyl, tert-butyl, 1-methylbutyl and 1-ethylpropyl; a cycloaliphatic group such as cyclopentyl, cyclohexyl and cycloheptyl, which may optionally be hydrocarbyl-substituted; or aromatic groups such as phenyl and naphthyl, and which groups may also carry one or more hydrocarbyl substituents such as for example lower alkyl substituents. Preferably R is an aromatic group, a phenyl group being especially preferred. Suitable hydrocarbyl groups R¹ for the compounds of general formula I include alkyl groups and especially lower alkyl groups such as for example methyl, ethyl, propyl, sec-propyl, butyl, sec-butyl, isobutyl and tert-butyl groups; as well as the cycloaliphatic and aromatic groups as mentioned hereinbefore for R. Preferably R¹ is aromatic and more preferably phenyl. Preferred phenyl groups carry a polar substituent such as for example an alkoxy group as exemplified by CH₃O- or a halogen group such as chlorine.

Although n in formula I may be 0 or 1, there is a preference for n is 0. When n is 1, X is preferably oxygen.

Compounds of general formula I which may be used in the process of the present invention include dimethyl isopropylphosphonite, diethyl sec-butylphosphonite, dimethyl tert-butylphos-phonite, dibutyl 1-methylbutylphosphonite, dimethyl isopropyl-phosphonate, dimethyl isopropylthiophosphonate, diethyl cyclopentylphosphonite, dimethyl phenylphosphonite, diethyl phenylphosphonite, diethyl phenylphosphonate, dipropyl phenylphosphonite, diethyl phenyl(thiophosphonate), diphenyl phenylphosphonite, diphenyl phenylphosphonate, diphenyl phenyl(thiophosphonate), bis(4-methoxyphenyl)phenylphosphonite and bis(3-chlorophenyl)phenylphosphonite.

Preferred compounds of general formula I are those wherein R and R¹ individually represent an aromatic hydrocarbyl group and more preferably a phenyl group. Especially preferred compounds of general formula I are selected from the group consisting of diphenyl phenylphosphonite, diphenyl phenylphosphonate, bis(4-methoxyphenyl)phenylphosphonite and bis(3-chlorophenyl)phenylphosphonite.

The compounds bis(4-methoxyphenyl)phenylphosphonite and bis(3-chlorophenyl)phenylphosphonite are novel and form another aspect of the present invention.

In the process of the present invention the compounds of formula I will generally be employed in an amount in the range of from 0.3-0.7 mol per mol of initiator, although higher and lower ratios should not be excluded, more preferably said ratio will be in the range of from 0.4-0.6 mol per mol, and a range of from 0.45-0.55 mol per mol being especially preferred.

The conjugated diene which may be employed as such, or in combination with one or more other anionically polymerizable compounds in the process of the present invention is preferably one containing from 4-8 carbon atoms per molecule. Examples of suitable conjugated diene monomers include 1,3-butadiene, isoprene, 2,3-dimethyl-1,3-butadiene and piperylene; 1,3-butadiene, isoprene and mixtures thereof being particularly preferred.

The monoalkylene aromatic compound which may be employed as such, or in combination with one or more other anionically polymerizable compounds, in the process of the present invention, preferably contains from 8 to 18 carbon atoms per molecule. Examples of suitable compounds include styrene, 3-methylstyrene, 4-n-propylstyrene, 4-cyclohexylstyrene, 4-decylstyrene, 2-ethyl-4-benzylstyrene, 4-p-tolylstyrene, 1-vinylnaphthalene and 2-vinylnaphthalene. Styrene is the most preferred monoalkylene aromatic compound.

The organoalkali metal initiator employed in the process of the present invention is preferably a hydrocarbyl monolithium compound, wherein the hydrocarbyl entity is selected from the group consisting of aliphatic, cycloaliphatic or aromatic radicals containing for example 1 to 20 carbon atoms per molecule. Preferred organolithium initiators are alkyllithium compounds such as n-butyllithium and sec-butyllithium, sec-butyllithium being especially preferred.

The nature of the hydrocarbon diluent which is employed in the process according to the present invention is not critical, and may for example be an aliphatic, cycloaliphatic or aromatic compound having from 4 to 10 carbon atoms per molecule, and includes n-pentane, isopentane, n-hexane, cyclopentane, cyclohexane, 2,2,4-trimethylpentane, benzene and toluene. Cyclohexane is a preferred hydrocarbon diluent.

The hydrocarbon diluent is generally employed in a weight excess with respect to the amount of monomer(s) to be employed. Preferably the diluent is employed in an amount in the range from 400 to 1500 parts per 100 parts by weight of monomer(s).

The temperature at which the process of the present invention is conducted is not critical and will generally be in the range of from -20 to 150 °C, and preferably in the range of from 30 to 90 °C. The polymerization of the monomer(s) may typically be completed within a time in the range of from a few minutes to about 6 hours, more specifically from 10 minutes to 2.5 hours.

When more than one monomer is employed the monomer addition may be carried out via a single or multiple addition procedure; with the latter mode of operation the different monomers may be added via consecutive additions, e.g. first the addition of the monoalkylene aromatic compounds and in a second addition the conjugated diene.

The compound of general formula I, i.e. the coupling agent, is added upon completion of the polymerization and before addition of any other material which might terminate the polymerization or displace the alkali metal atoms from the polymer chains formed in the reaction mixture. The temperature at which the coupling is accomplished is not critical and may vary over wide ranges and is advantageously similar to that at which the polymerization reaction had been conducted.

The compounds of general formula I, and in particular bis(4-methoxyphenyl)phenylphosphonite and bis(3-chlorophenyl)phenylphosphonite, may conveniently be prepared by a process which comprises initially contacting a dichloro-hydrocarbylphosphine, a hydrocarbyl-phosphonylchloride or a hydrocarbyl-thiophosphonylchloride, and in particular a dichloro-phenylphosphine, with a 10% molar excess of a suitable hydroxy compound, and in particular with 4-methoxyphenol or 3-chlorophenol, at room temperature. Subsequently slowly heating the mixture to a temperature in the range of from 180 °C-200 °C under argon, and maintaining said temperature for a sufficiently long time to allow for a complete conversion of the phosphine to phosphonite while allowing the co-produced HCl to escape from a vent opening. The phosphine conversion may be monitored by ³¹P NMR. After complete conversion the residue may be distilled in vacuo.

Such a process forms another aspect of the present invention.

The linear polymers which can be prepared according to the process of the present invention, i.e. one which includes a coupling agent of general formula I, are block copolymers wherein the end blocks are virtually identical, such as for example triblock polymers having terminal polyalkylene aromatic blocks and a poly-conjugated diene midblock, and will have a narrower molecular weight distribution than the corresponding polymers prepared via a sequential polymerization process. Other applications of said process include the preparation of high molecular weight poly-conjugated diene polymers, i.e. homo- and copolymers, which preparation would require excessively long reaction times when conducted in the absence of a coupling agent of general formula I.

The invention will be further illustrated with the following examples for which the following information is provided.

In so far the coupling agents used were not commercially available compounds, they were prepared according to the procedure as described hereinbefore for the preparation of e.g. bis(4-methoxyphenyl)phenylphosphonite, but using the appropriate reactants.

The coupling efficiency is expressed as the percentage by weight of coupled polymers on total polymer and is calculated from the relative percentage of the different polymer species as determined by gel permeation chromatography, using a Waters Associates - 440 equipment and calibrated against polystyrenes of known molecular weights.

Selectivity to linear coupled polymer is expressed as the percentage by weight of linear coupled polymer on total coupled polymer.

### Example I

### Preparation of bis(4-methoxyphenyl)phenylphosphonite.

In a 500 ml round bottomed three-necked flask equipped with an argon inlet, a Liebig condenser and a magnetic stirrer, a mixture of 11.8 g dichlorophenylphosphine and 23.8 g of freshly distilled 4-methoxyphenol (10% excess) was heated slowly to 180-200 °C and kept at this temperature overnight. The HCl was allowed to escape from a vent opening. The conversion was monitored by ³¹P NMR. After complete conversion of the phosphine to the phosphonite the residue was distilled in vacuo. This procedure resulted in a yield of the desired product of 92% and the following analytical data: B.p.: 200 °C/0.3 mm Hg. ³¹P NMR (CD₂Cl₂, ppm): 161.1. ¹H NMR (CD₂Cl₂, ppm): 3.78(s, 2 x 3H, OCH₃), 6.90(2 x 2H, C₆HₘₑₜₐOCH₃), 7.15(2 x 2H, C₆HₒᵣₜₕₒOCH₃), 7.56(m, 3H, phenyl), 7.93(m, 2H, phenyl). ¹³C NMR (CD₂Cl₂, ppm),
J(PC) in Herz: 56.0 (OCH₃), 149.5 (C₁, J = 4.5), 121.5 (C₂, J = 7.5), 115,1 (C₃), 156.5 (C₄, J = 1), 140.9 (PC₅, J = 16), 130.5 (C₆, J = 23.5), 129.0 (C₇, J = 6.5), 131.5 (C₈).

### Example II

### Preparation of bis(3-chlorophenyl)phenylphosphonite.

The procedure of Example I was repeated with the exception that the 4-methoxyphenol was replaced with 22.2 g of 3-chlorophenol and 11.5 g of dichlorophenylphosphine was employed, resulting in a yield of 77% and the following analytical data:
B.p.: 168 °C/0.001 mm Hg. ³¹P NMR (CD₂Cl₂, ppm):
161.5. ¹³C NMR (CD₂Cl₂, ppm), J(PC) in Herz: 156.2, (C₁, J = 4.5), 120.1 (C₂, J = 8), 135.7 (C₃), 124.7 (C₄), 132.1 (C₅), 118.9 (C₆, J = 8.5), 139.4 (PC₇, J = 15.5), 130.6 (C₈, J = 24.5), 129.2 (C₉, J = 7), 131.1 (C₁₀).

### Examples III-VII

Into a 500 ml glass bottle equipped with a serum cap were introduced 200 ml cyclohexane, 32 g 1,3-butadiene and 0.63 mmol sec-butyllithium. After mixing, the contents were heated to 60 °C in a water bath and maintained at said temperature until the polymerization had been completed (within 2 hours). Subsequently 0.30 mmol of coupling agent of the type as given in Table I hereinafter, was added and heating continued for another half hour. The results are given in Table I.

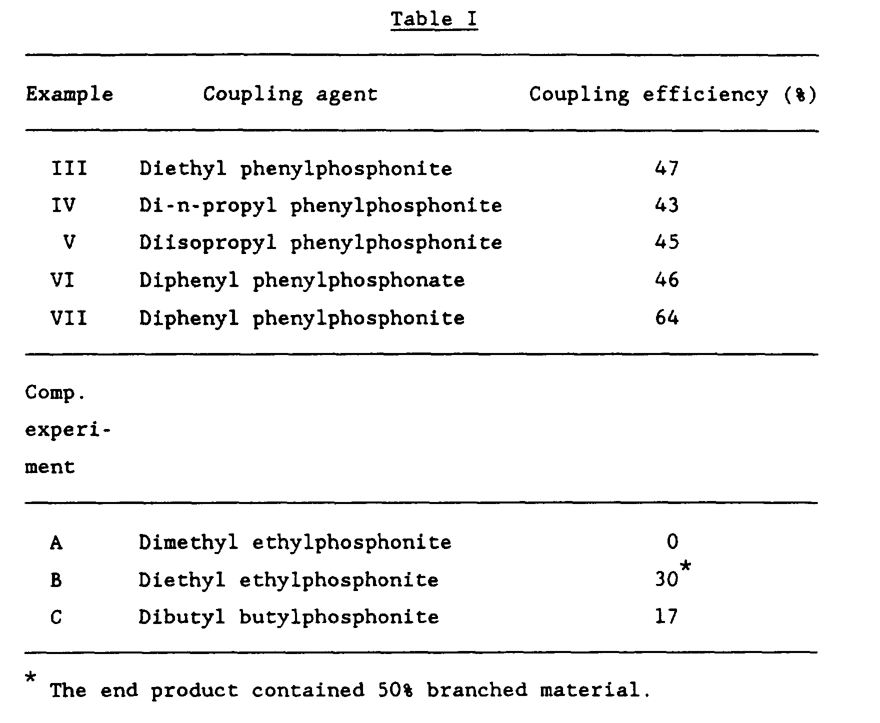

### Comparative experiments A-C

The procedure of Examples III-VII was repeated with the exception that 26 g of 1,3-butadiene and 1.05 mmol of sec-butyllithium were employed. The initiator/coupling agent molar ratio was 2 using the coupling agents as given in Table I, which also gives the corresponding results.

### Example VIII

A 10 l stainless steel reactor was charged with 6 l cyclohexane and 333 g styrene and heated to 60 °C. The polymerization was initiated by introduction of 26 mmol sec-butyllithium and heating at 60 °C continued until the polymerization had been completed (within 1 hour). Subsequently 667 g 1,3-butadiene were gradually added in 5 min and heating continued to achieve complete butadiene conversion (within 2 hours). Next 13 mmol diethyl phenylphosphonite were added after the temperature had been raised to 80 °C. The coupling reaction was allowed to proceed for 1.5 h. The polymer was isolated by steam coagulation followed by drying in an oven (50 °C). Based on GPC analysis the coupling efficiency was 64% with a selectivity to linear coupled polymer of 100%.

### Example IX

A 10 l reactor was charged with 7 l cyclohexane and 75 g styrene monomer and heated to 50 °C. The polymerization was initiated by the introduction of 7.2 mmol sec-butyllithium. The polymerization was allowed to proceed at a temperature of 60 °C until a conversion of essentially 100% was reached, which was achieved within 30 min. After completion of the styrene polymerization, 1 ml of 1,2-diethoxyethane was added as a modifier to produce polymers having a high 1,2- (3,4-) vinyl content. Subsequently, 425 g of isoprene was added in 5 min and the polymerization was continued at 60 °C. When all the isoprene had reacted, which required approximately 60 min, diphenyl phenylphosphonite (3.6 mmol) was added at 60 °C with stirring and the coupling reaction was continued for 15 min. The contents of the reactor were stabilized by the addition of 2,6-di-tert-butylcresol. The polymer was isolated by steam coagulation followed by drying in an oven (50 °C). Results are given in Table II.

### Example X

The procedure of Example IX was repeated except that no structure modifier was used and the coupling reaction was performed at a temperature of 70 °C.

### Example XI

The procedure of Example IX was repeated in this experiment except that the coupling reaction was performed at 80 °C using bis(4-methoxyphenyl)phenylphosphonite as coupling agent.

### Example XII

The procedure of Example IX was repeated except that 1,3-butadiene was used instead of isoprene and in the absence of a structure modifier while the coupling reaction was performed at 70 °C.

### Example XIII

The procedure of Example IX was repeated except that 1,3-butadiene was used instead of isoprene and the coupling reaction was performed at 80 °C.

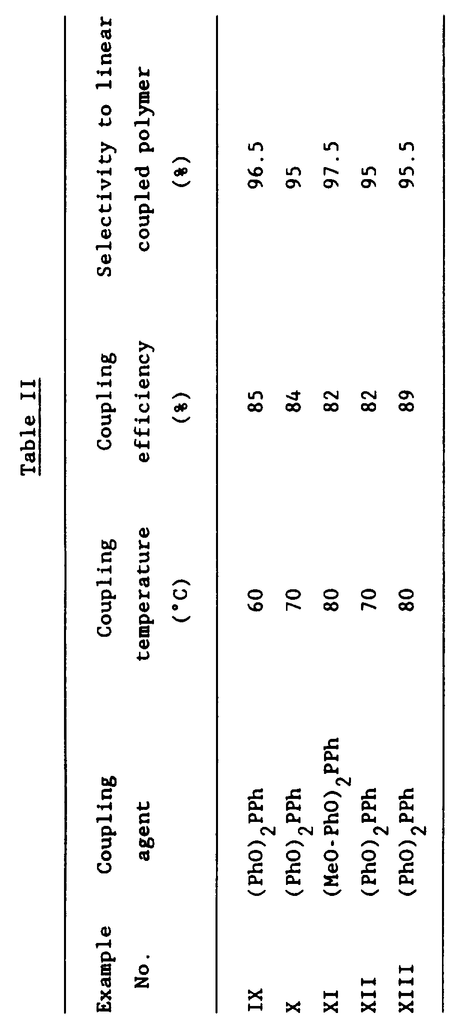

## Claims

1. A process for the preparation of linear polymers which comprises polymerizing at least a conjugated diene and/or a monoalkylene aromatic compound in the presence of an organoalkali metal initiator compound and at least a hydrocarbon diluent, and subsequently contacting the living polymer chains with a compound of general formula:
RP(X)ₙ(OR¹)₂ (I)
wherein R is a hydrocarbyl group of which the carbon atom connected to the phosphorus atom is a secondary or tertiary carbon atom; R¹ is an optionally substituted hydrocarbyl group; X represents an O or S atom; and n is 0 or 1.

2. A process as claimed in claim 1, wherein R is an aromatic hydrocarbyl group, and preferably phenyl.

3. A process as claimed in claim 1 or 2, wherein R¹ is an aromatic group, and preferably a phenyl group.

4. A process as claimed in claim 3, wherein the aromatic group R¹ carries a polar substituent.

5. A process as claimed in claim 4, wherein the polar substituent is an alkoxy group or halogen.

6. A process as claimed in any one of claims 1-5, wherein n is 0.

7. A process as claimed in any one of claims 1-5, wherein for n is 1 X represents an 0 atom.

8. A process as claimed in any one of claims 1-7, wherein R and R¹ simultaneously represent an aromatic group and preferably a phenyl group.

9. A process as claimed in any one of claims 1-3, wherein the compound of general formula I is selected from the group consisting of diphenyl phenylphosphonite, bis(4-methoxyphenyl)phenylphos phonite and bis(3-chlorophenyl)phenylphosphonite.

10. A process as claimed in any one of claims 1-3, wherein the compound of general formula I is diphenyl phenylphosphonate.

11. A process as claimed in any one of claims 1-10, wherein the compounds of general formula I are employed in an amount in the range of from 0.3-0.7 mol per mol of initiator.

12. A process as claimed in claim 11, wherein the amount of compound is in the range of 0.4-0.6 mol per mol of initiator and more preferably in the range of from 0.45-0.55.

13. A process as claimed in any one of claims 1-12, wherein the conjugated diene is 1,3-butadiene, isoprene or a mixture thereof.

14. A process as claimed in any one of claims 1-12, wherein the monoalkylene aromatic compound is styrene.

15. A process as claimed in any one of claims 1-14, wherein the hydrocarbon diluent is cyclohexane.

16. A process as claimed in any one of claims 1-15, which is conducted at a temperature in the range of from -20 to 150 °C and preferably in a range of from 30 to 90 °C.

17. The compounds bis(4-methoxyphenyl)phenylphosphonite and bis(3-chlorophenyl)phenylphosphonite.

18. A process for the preparation of the compounds as claimed in claim 17, which comprises mixing dichlorophenylphosphine with a molar excess of 4-methoxyphenol respectively 3-chlorophenol at room temperature, subsequently heating the mixture slowly to a temperature in the range of from 180-200 °C and maintaining the reaction mixture for a sufficiently long time to allow the desired product to be formed, while allowing the co-produced HCl to escape from the reactor, and finally distilling the residue under reduced pressure.

19. Linear polymers derived from at least a conjugated diene and/or a monoalkylene aromatic compound whenever prepared according to a process as claimed in any one of claims 1-16.

## Patentansprüche

1. Verfahren zur Herstellung von linearen Polymeren, umfassend: Polymerisation zumindest eines konjugierten Diens und/oder einer monoalkylenaromatischen Verbindung in Gegenwart eines aus einer alkalimetallorganischen Verbindung bestehenden Initiators und zumindest eines aus einem Kohlenwasserstoff bestehenden Verdünnungsmittels und anschließendes Kontaktieren der Ketten des lebenden Polymers mit einer Verbindung der allgemeinen Formel:
RP (X)ₙ(OR¹)₂ (I),
worin R eine Kohlenwasserstoffgruppe, deren mit dem Phosphoratom verbundenes Kohlenstoffatom ein sekundäres oder tertiäres Kohlenstoffatom darstellt, R¹ eine gegebenenfalls substituierte Kohlenwasserstoffgruppe, X ein O- oder S-Atom und n 0 oder 1 bedeuten.

2. Verfahren nach Anspruch 1, wobei R eine aromatische Kohlenwasserstoffgruppe und vorzugsweise Phenyl bedeutet.

3. Verfahren nach Anspruch 1 oder 2, wobei R¹ eine aromatische Gruppe und vorzugsweise eine Phenylgruppe bedeutet.

4. Verfahren nach Anspruch 3, wobei die aromatische Gruppe R¹ einen polaren Substituenten trägt.

5. Verfahren nach Anspruch 4, wobei der polare Substituent eine Alkoxygruppe oder Halogen ist.

6. Verfahren nach einem der Ansprüche 1-5, wobei n 0 bedeutet.

7. Verfahren nach einem der Ansprüche 1-5, wobei bei n gleich 1 X ein O-Atom bedeutet.

8. Verfahren nach einem der Ansprüche 1-7, wobei R und R¹ gleichzeitig eine aromatische Gruppe und vorzugsweise eine Phenylgruppe bedeuten.

9. Verfahren nach einem der Ansprüche 1-3, wobei die Verbindung der allgemeinen Formel I aus der Gruppe Diphenyl-phenylphosphonit, Bis(4-methoxy-phenyl)-phenylphosphonit und Bis (3-chlorphenyl)-phenylphosphonit ausgewählt ist.

10. Verfahren nach einem der Ansprüche 1-3, wobei die Verbindung der allgemeinen Formel I Diphenylphenylphosphonat ist.

11. Verfahren nach einem der Ansprüche 1-10, wobei die Verbindungen der allgemeinen Formel I in einer Menge im Bereich von 0,3-0,7 Mol pro Mol Initiator eingesetzt werden.

12. Verfahren nach Anspruch 11, wobei die Menge der Verbindung im Bereich von 0,4-0,6 Mol pro Mol Initiator und besonders bevorzugt im Bereich von 0,45-0,55 liegt.

13. Verfahren nach einem der Ansprüche 1-12, wobei das konjugierte Dien 1,3-Butadien, Isopren oder deren Mischung ist.

14. Verfahren nach einem der Ansprüche 1-12, wobei die monoalkylenaromatische Verbindung Styrol ist.

15. Verfahren nach einem der Ansprüche 1-14, wobei das aus einem Kohlenwasserstoff bestehende Verdünnungsmittel Cyclohexan ist.

16. Verfahren nach einem der Ansprüche 1-15, wobei das Verfahren bei einer Temperatur im Bereich von -20 bis 150°C und vorzugsweise im Bereich von 30 bis 90°C durchgeführt wird.

17. Die Verbindungen Bis(4-methoxyphenyl)-phenylphosphonit und Bis(3-chlorphenyl)-phenylphosphonit.

18. Verfahren zur Herstellung der Verbindungen nach Anspruch 17, bei dem man Dichlor-phenylphosphin mit einem molaren Überschuß von 4-Methoxyphenol bzw. 3-Chlorphenol bei Raumtemperatur mischt, die Mischung anschließend langsam auf eine Temperatur im Bereich von 180-200°C erhitzt und die Reaktionsmischung über einen zur Bildung des gewünschten Produkts ausreichend langen Zeitraum hält, wobei man gleichzeitig das mitentstehende HCl aus dem Reaktor entweichen läßt und schließlich den Rückstand unter vermindertem Druck destilliert.

19. Lineare Polymere, die von mindestens einem konjugierten Dien und/oder einer monoalkylenaromatischen Verbindung abgeleitet sind, solange sie nach einem Verfahren nach einem der Ansprüche 1-16 hergestellt worden sind.

## Revendications

1. Procédé de préparation de polymères linéaires, caractérisé en ce que l'on polymérise au moins un diène conjugué et/ou un composé monoalkylène aromatique en présence d'un amorceur du type organométal alcalin et au moins un diluant hydrocarboné et on met ensuite les chaînes polymériques vivantes en contact avec un composé de la formule générale :
RP(X)ₙ(OR¹)₂ (I)
dans laquelle R représente un radical hydrocarbyle dont l'atome de carbone lié à l'atome de phosphore est un atome de carbone secondaire ou tertiaire, R¹ est un radical hydrocarbyle éventuellement substitué, X représente un atome d'oxygène ou de soufre et n est égal à 0 ou à 1.

2. Procédé suivant la revendication 1, caractérisé en ce que R représente un radical hydrocarbyle aromatique et, de préférence, le radical phényle.

3. Procédé suivant la revendication 1 ou 2, caractérisé en ce que R¹ représente un radical aromatique et, de préférence, le radical phényle.

4. Procédé suivant la revendication 3, caractérisé en ce que le radical aromatique R¹ porte un substituant polaire.

5. Procédé suivant la revendication 4, caractérisé en ce que le substituant polaire est un atome d'halogène ou un radical alcoxy.

6. Procédé suivant l'une quelconque des revendications 1 à 5, caractérisé en ce que n est égal à 0.

7. Procédé suivant l'une quelconque des revendications 1 à 5, caractérisé en ce que X représente un atome d'oxygène lorsque n est égal à 1.

8. Procédé suivant l'une quelconque des revendications 1 à 7, caractérisé en ce que R et R¹ représentent simultanément des radicaux aromatique et, de préférence, des radicaux phényle.

9. Procédé suivant l'une quelconque des revendications 1 à 3, caractérisé en ce que l'on choisit le composé de la formule générale I parmi le phénylphosphonite de diphényle, le phénylphosphonite de bis(4-méthoxyphényle) et le phénylphosphonite de bis(3-chlorophényle).

10. Procédé suivant l'une quelconque des revendications 1 à 3, caractérisé en ce que le composé de la formule générale I est le phénylphosphonate de diphényle.

11. Procédé suivant l'une quelconque des revendications 1 à 10, caractérisé en ce que l'on utilise les composés de la formule générale I en une proportion qui varie de 0,3 à 0,7 mole par mole d'amorceur.

12. Procédé suivant la revendication 11, caractérisé en ce que la proportion du composé varie de 0,4 à 0,6 mole par mole d'amorceur et, de préférence, dans la plage de 0,45 à 0,55 mole par mole d'amorceur.

13. Procédé suivant l'une quelconque des revendications 1 à 12, caractérisé en ce que le diène conjugué est le 1,3 -butadiène, l'isoprène, ou un mélange de ceux-ci.

14. Procédé suivant l'une quelconque des revendications 1 à 12, caractérisé en ce que le composé monoalkylène aromatique est le styrène.

15. Procédé suivant l'une quelconque des revendications 1 à 14, caractérisé en ce que le diluant hydrocarboné est le cyclohexane.

16. Procédé suivant l'une quelconque des revendications 1 à 15, caractérisé en ce que l'on entreprend à une température qui varie de -20 à 150°C et, de préférence, de 30 à 90°C.

17. Les composés que sont le phénylphosphonite de bis(4-méthoxyphényle) et le phénylphosphonite de bis(3-chlorophényle).

18. Procédé de préparation des composés suivant la revendication 17, caractérisé en ce que l'on mélange de la dichlorophénylphosphine à un excès molaire de 4-méthoxyphénol ou de 3-chlorophénol à la température ambiante, puis on chauffe lentement le mélange jusqu'à une température qui varie de 180 à 200°C et on maintient le mélange réactionnel à cette température pendant une durée suffisamment longue pour permettre la formation du produit souhaité, tout en permettant à l'HCl conjointement produit de s'échapper du réacteur et on distille finalement le résidu sous pression réduite.

19. Polymères linéaires dérivés d'au moins un diène conjugué et/ou un composé monoalkylène aromatique, préparés par mise en oeuvre d'un procédé suivant l'une quelconque des revendications 1 à 16.
